# EUROPÄISCHE PATENTSCHRIFT

(11) **EP 0 997 800 B1**
(45) Veröffentlichungstag und Bekanntmachung des Hinweises auf die Patenterteilung: **24.07.2002**
(21) Anmeldenummer: 98120182.5
(22) Anmeldetag: 29.10.1998
(51) Int. Cl.: G05B 17/02

(54) **Gerät zur Verwendung in einem industriellen Prozess und Anlage mit solchen Geräten sowie Verfahren zum Simulieren des Betriebs einer solchen Anlage**
Device used in an industrial process, installation using such devices and method for simulating the operation of such an installation
Dispositif utilisé dans un procédé industriel,installation utilisant de tels dispositifs et méthode pour la simulation du fonctionnement d' une installation de ce type

(43) Veröffentlichungstag der Anmeldung: 03.05.2000
(73) Patentinhaber: Endress + Hauser GmbH + Co.KG., 79689 Maulburg (DE)
(72) Erfinder: Georg, Erich, Dr., D-79585 Hägelberg (DE); Lindner, Klaus-Peter, D-79585 Steinen (DE)
(74) Vertreter: Schwepfinger, Karl-Heinz, Dipl.-Ing.

(56) Entgegenhaltungen:
- EP-A- 0 375 786
- EP-A- 0 435 188
- EP-A- 0 660 210
- EP-A- 0 809 162
- DE-A- 19 639 424
- FR-A- 2 724 744
- GB-A- 2 284 906
- US-A- 5 528 752
- US-A- 5 659 467
- BARNIKOW A ET AL: "DICTUM: DECISION SUPPORT SYSTEM FOR ANALYSIS AND SYNTHESIS OF LARGE-SCALE INDUSTRIAL SYSTEMS PART I: COMPONENTS" COMPUTERS IN INDUSTRY, Bd. 18, Nr. 2, 1. Februar 1992, Seiten 135-144, XP000258301

## Beschreibung

Die Erfindung bezieht sich auf ein Gerät zur Verwendung in einem industriellen Prozeß, in dem es zum Übertragen von Daten- und Steuersignalen über einen Bus mit einer zentralen Steuereinheit verbindbar ist. Ferner bezieht sie sich auf eine Anlage mit solchen Geräten sowie ein Verfahren zum Simulieren einer solchen Anlage.

Komplexe Prozesse und Verfahrensabläufe, z.B. der Betrieb einer großen Industrieanlage, laufen heutzutage automatisiert ab. In einer solchen Anlage sind in der Regel zahlreiche Geräte, beispielsweise Sensoren, Aktoren, Ventile, Pumpen und dergleichen über einen Bus mit einer zentralen Steuereinheit (PC oder Prozeßleitsystem) verbunden, die die Geräte steuert. Ein wesentlicher Punkt für die Sicherheit und die Funktionsfähigkeit der Anlage ist dabei das Verhalten jedes einzelnen Geräts sowie das Zusammenspiel der Geräte untereinander. Derzeit ist es üblich, für jedes Gerät eine Gerätebeschreibung zu erstellen, die in die zentrale Steuereinheit geladen wird und diese über die Funktionalität und die Parameter des Geräts informiert. Diese Gerätebeschreibung ist aber unvollständig und nicht geeignet, der zentralen Steuereinheit ein vollständiges Abbild des Geräts zur Verfügung zu stellen. Anlagen, in denen Geräte verwendet werden, für die diese unvollständigen Gerätebeschreibungen existieren und in die zentrale Steuereinheit geladen werden, können daher nur im praktischen Betrieb getestet werden, und auch das Gesamtverhalten der Anlage, das durch das Zusammenspiel der einzelnen Geräte bestimmt wird, läßt sich nur mit den tatsächlich in Betrieb befindlichen Geräten testen und analysieren.

Der Erfindung liegt die Aufgabe zugrunde, ein Gerät der eingangs angegebenen Art zu schaffen, das so ausgestattet ist, daß es der zentralen Steuereinheit ermöglicht, den tatsächlichen Betrieb des Geräts so zu simulieren, als wäre es tatsächlich über den Bus mit der zentralen Steuereinheit verbunden. Ferner soll eine Anlage mit solchen Geräten geschaffen werden, deren Gesamtverhalten in der zentralen Steuereinheit simuliert werden kann. Ferner soll ein Verfahren zum Simulieren einer solchen Anlage geschaffen werden.

Das erfindungsgemäße Gerät ist dadurch gekennzeichnet, daß in dem Gerät ein Software-Gerätemodell gespeichert ist, das ein vollständiges Abbild des Geräts einschließlich seiner Parameter, Funktionalität und Ablaufprogramme enthält.

Die Anlage gemäß der Erfindung ist dadurch gekennzeichnet, daß die Gerätemodelle in die Steuereinheit ladbar sind, daß in der Steuereinheit ein Softwareprogramm vorgesehen ist, mit dessen Hilfe unter Verwendung der geladenen Gerätemodelle der Betrieb der Anlage zu deren Test unter Einbeziehung aller in den Gerätemodellen enthaltenen Parameter und Funktionalitäten simuliert werden kann.

Das Verfahren nach der Erfindung ist dadurch gekennzeichnet, daß in die zentrale Steuereinheit Gerätemodelle der in der Anlage einzusetzenden Geräte geladen werden, das mittels einem in der Steuereinheit ablaufenden Softwareprogramms der Betrieb der Anlage unter Einbeziehung aller in den Gerätemodellen enthaltenen Parameter und Funktionalitäten simuliert wird.

Die Erfindung wird nun anhand der Zeichnung beispielshalber erläutert. Es zeigen:
- Figur 1: eine schematische Darstellung einer Anlage mit erfindungsgemäßen Geräten,
- Figur 2: ein Meßgerät mit seinen wesentlichen Elementen in schematischer Form und
- Figur 3: ein Anwendungsbeispiel der Erfindung.

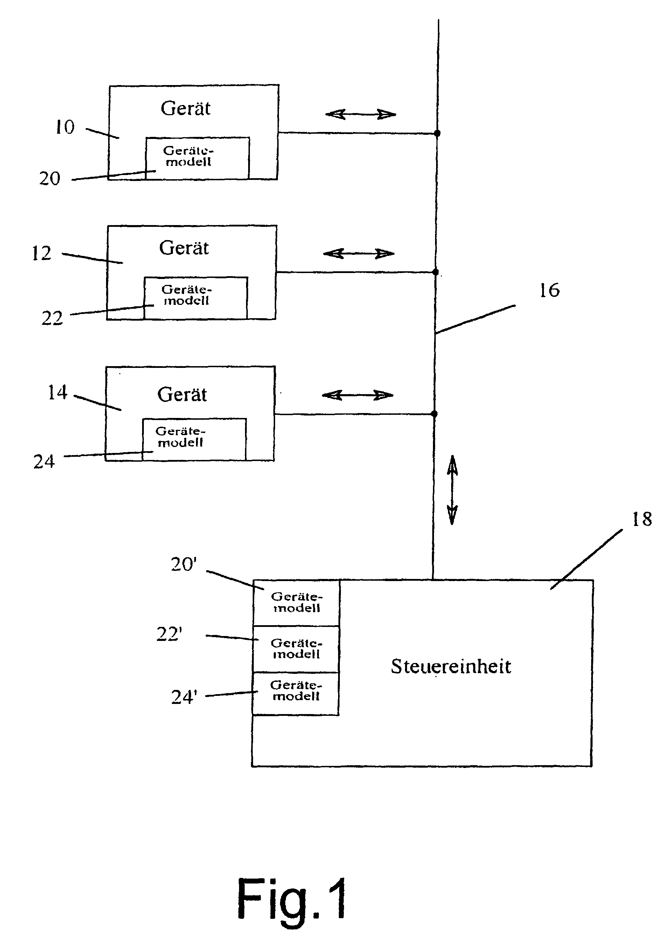

Die in Figur 1 dargestellte Anlage enthält beispielsweise drei Geräte, 10, 12 und 14, die über einen Bus 16 mit einer zentralen Steuereinheit 18 verbunden sind. Bei den Geräten kann es sich um Sensoren, Aktoren, Ventile, Pumpen usw. handeln. In jedem Gerät 10, 12, 14 ist ein Gerätemodell 20, 22 bzw. 24 gespeichert, das alle relevanten Informationen über das Gerät enthält, also alle Parameter, die Gerätefunktionalität sowie die im Gerät enthaltenen Programme und Ablaufvorgaben. Dieses Gerätemodell ist somit jeweils eine vollständige Abbildung des Geräts, so daß mit ihm bei Einsatz eines entsprechenden Softwareprogramms ebenso wie mit dem tatsächlichen Gerät gearbeitet werden kann.

Die Gerätemodelle können in die zentrale Steuereinheit 18 geladen werden, was bei 20', 22' und 24' angedeutet ist.

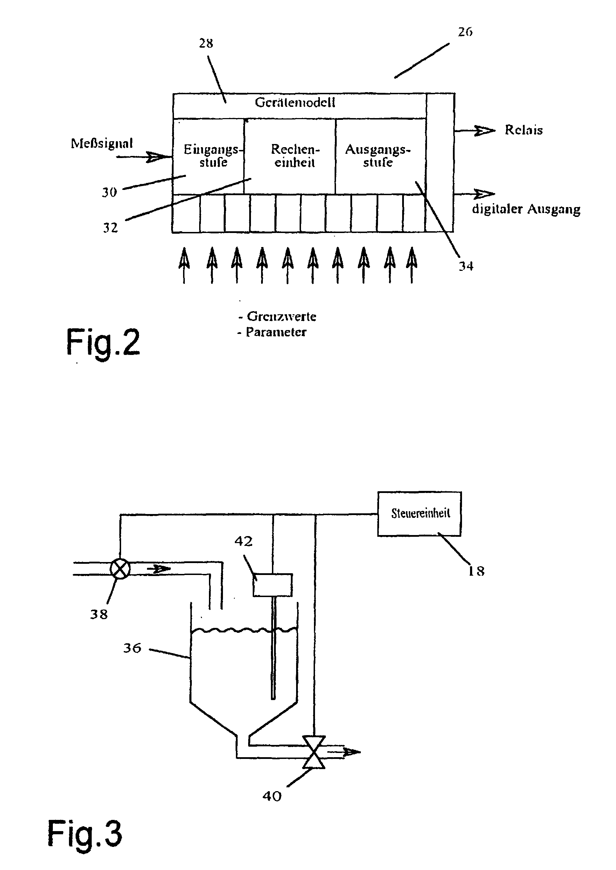

In Figur 2 ist in schematischer Form ein Meßgerät 26 mit seinen wesentlichen Einheiten dargestellt, das mit einem Gerätemodell ausgestattet ist. Dieses Meßgerät empfängt an einer Eingangsstufe 30 ein Meßsignal, verarbeitet dieses Meßsignal in einer Recheneinheit 32 unter Berücksichtigung von eingegebenen Parametern und Grenzwerten und gibt dann über eine Ausgangsstufe 34 digitale Daten an den Bus 16 zur Weiterleitung an die zentrale Steuereinheit 18 ab oder erzeugt auch ein Ausgangssignal, das direkt ein Relais betätigt. Das im Meßgerät 26 gespeicherte Gerätemodell 28 kann in die zentrale Steuereinheit 18 geladen werden, das dann einen bestimmten Meßsignalverlauf vorgibt und das Verhalten des Meßgeräts 26 anhand des Gerätemodells 28 simuliert. Dabei wird der gesamte Ablauf von der Meßsignalaufnahme über die Meßsignalverarbeitung bis zur Ausgabe des Meßwerts und/oder dem Schalten eines Relais nachgebildet. Die Meßsignalverarbeitung wird durch die Parameter und die Funktionalitäten vorgegeben. Bei einem regulären Betrieb des Meßgeräts erfolgt die Meßsignalverarbeitung natürlich unter Einbeziehung der Parameter und Funktionalitäten in dessen Recheneinheit, indem Programme und/oder Ablaufvorgaben abgearbeitet werden.

Bei Einsatz mehrerer solcher Geräte mit in ihnen abgespeicherten Gerätemodellen und dem entsprechenden Softwareprogramm in der zentralen Steuereinheit 18 kann eine gesamte Anlage konzipiert und deren Verhalten simuliert werden. Dabei kann insbesondere auch das Wechselspiel zwischen vielen verschiedenen Geräten simuliert werden. Hierdurch wird es ermöglicht, auch verfahrenstechnisch sehr kritische Prozeßsituationen nachzuempfinden und die Einstellungen und die Funktionsfähigkeit aller Geräte sowie deren fehlerfreies Zusammenspiel können getestet werden.

Es ist auch möglich, iterative Prozesse bei der Einstellung der Meßgeräte erheblich abzukürzen. Als Beispiel sei ein Behälter 36 genannt, der oben mittels einer Pumpe 38 befüllt wird und der unten einen mit einem einstellbaren Ventil verschließbaren Ablauf aufweist. Ein Meßgerät 42 bestimmt dabei den Füllstand im Behälter 36. In Figur 3 ist ein Beispiel eines solchen Anwendungsfalls schematisch dargestellt. Aufgrund der Simulation mittels des in dem Meßgerät 42 gespeicherten und in die Steuereinheit 18 ladbaren Gerätemodells kann direkt erkannt werden, ob die Pumpe 36 beispielsweise mehr Füllgut zuführt, als über das Ventil 40 abfließt und deshalb bereits bei niedrigerem Füllstand eine Ventilöffnung erfolgen sollte. Falls bei der Simulation das Problem erkannt wird und dabei alle relevanten Variablen ermittelt wurden, kann deren Dimensionierung für das gewünschte korrekte Verhalten vorgenommen werden.

Die Gerätemodelle 20, 22, 24, 28 können auch als selbständige, z.B. in einer Datenbank abgelegte Simulationsbausteine zur Simulation verwendet werden. Dabei ist es natürlich auch möglich, diese Gerätemodelle auf Datenträger zu speichern, die von dem Datenträger in die zentrale Steuereinheit 18 geladen werden.

Vorzugsweise sind die Gerätemodelle aber in den jeweiligen Geräten abgelegt, und die Verbindung mit der zentralen Steuereinheit erfolgt über die bidirektionale Busverbindung. Beim Simulieren wirkt die zentrale Steuereinheit dann unter dem Einfluß des entsprechenden Softwareprogramms wie ein Simulationsrechner.

Sollte sich bei einer Simulation herausstellen, daß die im Gerätemodell enthaltenen Parameter ungünstig sind, können sie von der Zentrale aus verändert werden, wobei dann das entsprechend veränderte Gerätemodell im Gerät abgespeichert wird. Die Veränderungen des Gerätemodells können sich dabei neben den Änderungen auf die Parameter auch auf die im jeweiligen Gerät vorhandene Software beziehen.

Durch die Erfindung wird es ermöglicht, auf einfache Weise industrielle Anlagen zu konzipieren und zu testen, ohne daß es erforderlich ist, die üblicherweise in großer Anzahl vorhandenen Geräte tatsächlich in Betrieb zu nehmen.

## Patentansprüche

1. Gerät (10, 12, 14) zur Verwendung in einem industriellen Prozeß, in dem es zum Übertragen von Daten- und Steuersignalen über einen Bus (16) mit einer zentralen Steuereinheit (18) verbunden ist, **dadurch gekennzeichnet, daß** in dem Gerät (10, 12, 14) ein Software-Gerätemodell (20, 22, 24) gespeichert ist, das ein vollständiges Abbild des Geräts einschließlich seiner Parameter, Funktionalität und Ablaufprogramme enthält.

2. Gerät nach Anspruch 1, **dadurch gekennzeichnet, daß** das Gerätemodell (20, 22, 24) in einer einheitlichen Programmsprache erstellt ist, mit der die Funktionalität und die Parameter des Geräts (10, 12, 14) eindeutig abbildbar sind.

3. Gerät nach Anspruch 1 oder 2, **dadurch gekennzeichnet, daß** das Gerätemodell (20, 22, 24) in einer Version abgespeichert ist, die eine optimale Nutzung des im Gerät (10, 12, 14) verfügbaren Speicherplatzes ermöglicht.

4. Gerät nach einem der Ansprüche 1 bis 3, **dadurch gekennzeichnet, daß** das Gerätemodell (20, 22, 24) mittels eines Softwareprogramms modifizierbar ist.

5. Gerät nach einem der vorhergehenden Ansprüche, **dadurch gekennzeichnet, daß** der Zugriff zum Auslesen und Schreiben des Gerätemodells (20, 22, 24) mittels eines Softwareprogramms ermöglicht wird.

6. Gerät nach Anspruch 5, **dadurch gekennzeichnet, daß** die Zugriffsrechte auf das zum Auslesen und Schreiben eingesetzten Softwareprogramms konfigurierbar sind.

7. Gerät nach einem der vorhergehenden Ansprüche, **dadurch gekennzeichnet, daß** die Zugriffsrechte auf das Gerätemodell (20, 22, 24) konfigurierbar sind.

8. Gerät nach einem der vorhergehenden Ansprüche, **dadurch gekennzeichnet, daß** das Gerätemodell (20, 22, 24) auf einem Datenträger abspeicherbar und von einem Softwareprogramm benutzbar ist.

9. Anlage mit mehreren Geräten (10, 12, 14) gemäß einem der Ansprüche 1 bis 8, die über einen Bus (16) mit einer zentralen Steuereinheit (18) verbunden sind, **dadurch gekennzeichnet, daß** die Gerätemodelle (20, 22, 24) in die Steuereinheit (18) ladbar sind, daß in der Steuereinheit (18) ein Softwareprogramm vorgesehen ist, mit dessen Hilfe unter Verwendung der geladenen Gerätemodelle (20', 22', 24') der Betrieb der Anlage zu deren Test unter Einbeziehung aller in den Gerätemodellen (20', 22', 24') enthaltenen Parameter und Funktionalitäten simuliert werden kann.

10. Anlage nach Anspruch 9, **dadurch gekennzeichnet, daß** die Gerätemodelle (20', 22', 24') je nach dem Ergebnis der Simulation von der zentralen Steuereinheit (18) modifizierbar sind.

11. Verfahren zum Simulieren des Betriebs einer Anlage nach Anspruch 9 oder 10, **dadurch gekennzeichnet, daß** in die zentrale Steuereinheit (18) Gerätemodelle (20', 22', 24') der in der Anlage einzusetzenden Geräte (10, 12, 14) geladen werden, daß mittels einem in der Steuereinheit (18) ablaufenden Softwareprogramms der Betrieb der Anlage unter Einbeziehung aller in den Gerätemodellen (20', 22', 24') enthaltenen Parameter und Funktionalitäten simuliert wird.

12. Verfahren nach Anspruch 11, **dadurch gekennzeichnet, daß** die Gerätemodelle (20, 22, 24) in Abhängigkeit vom Ergebnis der Simulation von der zentralen Steuereinheit (18) modifiziert werden.

## Claims

1. An apparatus (10, 12, 14) for use in an industrial process in which for communicating data and control signals it is connected to a central control unit (18) via a bus (16), **characterized in that** in said apparatus (10, 12, 14) a software apparatus model (20, 22, 24) is memorized which contains a comprehensive mimic image of said apparatus including its parameters, functionality and sequence programs.

2. The apparatus as set forth in claim 1, **characterized in that** said apparatus model (20, 22, 24) is formulated in a uniform program language with which said functionality and said parameters of said apparatus (10, 12, 14) can be uniquely simulated.

3. The apparatus as set forth in claim 1 or 2, **characterized in that** said apparatus model (20, 22, 24) is memorized in a version permitting optimum use to be made of the available memory capacity in said apparatus (10, 12, 14).

4. The apparatus as set forth in any of the claims 1 to 3, **characterized in that** said apparatus model (20, 22, 24) is modifiable by means of a software program.

5. The apparatus as set forth in any of the preceding claims, **characterized in that** the access for reading and writing said apparatus model (20, 22, 24) is made possible by means of a software program.

6. The apparatus as set forth in claim 5, **characterized in that** access authorization to said software program employed for reading and writing is configurable.

7. The apparatus as set forth in any of the preceding claims, **characterized in that** said access authorization is configurable on said apparatus model (20, 22, 24).

8. The apparatus as set forth in any of the preceding claims, **characterized in that** said apparatus model (20, 22, 24) is memorizable on a data carrier and usable by a software program.

9. A plant including a plurality of apparatuses (10, 12, 14) as set forth in any of the claims 1 to 8, connected to a central control unit (18) via a bus (16), **characterized in that** said apparatus models (20, 22, 24) are loadable into said control unit (18), that in said control unit (18) a software program is provided with the aid of which in using said loaded apparatus models (20', 22', 24') the operation of said plant can be simulated for testing it including all parameters and functionalities contained in said apparatus models (20', 22', 24').

10. The plant as set forth in claim 9, **characterized in that** said apparatus models (20', 22', 24') are modifiable by said central control unit (18) depending on the result of simulation.

11. A method of simulating the operation of a plant as set forth in claim 9 or 10, **characterized by** it comprising the steps of loading apparatus models (20', 22', 24') of said apparatuses (10, 12, 14) to be employed in said plant into said central control unit (18) and simulating the operation of said plant including all parameters and functionalities contained in said apparatus models (20', 22', 24') by means of a software program sequenced in said control unit (18).

12. The method as set forth in claim 11, **characterized by** modifying said apparatus models (20, 22, 24) by said central control unit (18) as a function of the result of simulation.

## Revendications

1. Appareil (10, 12, 14) destiné à être utilisé dans un processus industriel dans lequel il est relié à une unité de commande centrale (18) via un bus (16) pour transmettre des signaux de données et de commande, **caractérisé en ce que** dans l'appareil (10, 12, 14) est mémorisé un modèle d'appareil sous forme de logiciel (20, 22, 24) qui contient une reproduction totale de l'appareil y compris ses paramètres, sa fonctionnalité et ses programmes de déroulement.

2. Appareil selon la revendication 1, **caractérisé en ce que** le modèle d'appareil (20, 22, 24) est formulé dans un langage de programmation uniforme grâce auquel on peut reproduire explicitement la fonctionnalité et les paramètres de l'appareil (10, 12, 14).

3. Appareil selon la revendication 1 ou 2, **caractérisé en ce que** le modèle d'appareil (20, 22, 24) est mémorisé dans une version qui permet une utilisation optimale de la capacité de mémoire disponible dans l'appareil (10, 12, 14).

4. Appareil selon l'une des revendications 1 à 3, **caractérisé en ce que** le modèle d'appareil (20, 22, 24) est modifiable au moyen d'un logiciel.

5. Appareil selon l'une des revendications précédentes, **caractérisé en ce que** l'accès pour la lecture et l'écriture du modèle d'appareil (20, 22, 24) est rendu possible par un logiciel.

6. Appareil selon la revendication 5, **caractérisé en ce que** les droits d'accès sur le logiciel utilisé pour la lecture et l'écriture sont configurables.

7. Appareil selon l'une des revendications précédentes, **caractérisé en ce que** les droits d'accès sur le modèle d'appareil (20, 22, 24) sont configurables.

8. Appareil selon l'une des revendications précédentes, **caractérisé en ce que** le modèle d'appareil (20, 22, 24) est mémorisable sur un support de données et utilisable par un logiciel.

9. Installation avec plusieurs appareils (20, 22, 24) selon l'une des revendications 1 à 8, qui sont reliés via un bus (16) avec une unité de commande centrale (18), **caractérisé en ce que** les modèles d'appareils (20, 22, 24) sont chargeables dans l'unité de commande (18), **en ce que** dans l'unité de commande (18) est prévu un logiciel à l'aide duquel on peut simuler, en utilisant les modèles d'appareils (20', 22', 24') chargés, le fonctionnement de l'installation pour la tester en tenant compte de tous les paramètres et fonctionnalités contenus dans les modèles d'appareils (20', 22', 24').

10. Installation selon la revendication 9, **caractérisé en ce que** les modèles d'appareils (20', 22', 24') sont modifiables par l'unité de commande centrale (18) selon le résultat de la simulation.

11. Procédé de simulation du fonctionnement d'une installation selon les revendications 9 ou 10, **caractérisé en ce que** dans l'unité de commande centrale (18) sont chargés des modèles d'appareils (20', 22', 24') des appareils (10, 12, 14) à utiliser dans l'installation, **en ce qu'**au moyen d'un logiciel se déroulant dans l'unité de commande (18), le fonctionnement de l'installation est simulé en tenant compte de tous les paramètres et fonctionnalités contenus dans les modèles d'appareils (20', 22', 24').

12. Procédé selon la revendication 11, **caractérisé en ce que** les modèles d'appareils (20', 22', 24') sont modifiés en fonction du résultat de la simulation de l'unité de commande centrale (18).
